# EUROPÄISCHE PATENTANMELDUNG

(11) **EP 2 623 806 A1**
(43) Veröffentlichungstag der Anmeldung: **07.08.2013**
(21) Anmeldenummer: 13151326.9
(22) Anmeldetag: 15.01.2013
(51) Int. Cl.: F16D 1/108

(54) **Vorrichtung zum drehenden Antreiben einer Welle**

(30) Priorität: 01.02.2012 CH 1342012
(71) Anmelder: Fr. Sauter AG, 4016 Basel (CH)
(72) Erfinder: Nasdala, Björn, 79541 Lörrach (DE)
(74) Vertreter: Bohest AG

(57) **Zusammenfassung**

Eine Vorrichtung zum drehenden Antreiben einer Welle umfasst eine Antriebseinheit mit einem Drehteil (130) und einen Adapter (200) für die Welle. Das Drehteil (130) besitzt eine Steckfassung (132) und der Adapter (200) weist ein Steckorgan (220) auf, wobei die Steckfassung (132) und das Steckorgan (220) mit Formschlussmitteln zur Drehkupplung ausgestattet sind. Es sind Fixiermittel vorhanden, um den Adapter lösbar an der Antriebseinheit zu befestigen. Die Fixiermittel weisen ein am Adapter (200) angeordnetes und federnd einwärts bewegliches Arretierelement (261) mit einem Fortsatz (2611) und einem radial auswärts vorstehenden Vorsprung (2612) auf. Der Fortsatz erstreckt sich in eine Ausnehmung (222) in der Wand des Steckorgans (220) hinein. An der Innenwand der Steckfassung (132) ist eine Hinterschneidung (134) ausgebildet ist, welche der Vorsprung (2612) des Arretierelements (261) federnd hintergreift und dadurch den Adapter (200) axial fixiert. Der Vorsprung (2612) kann durch radiale Einwärtsbewegung des Arretierelements (261) ausser Eingriff mit der Hinterschneidung (134) gebracht werden.

## Beschreibung

Die vorliegende Erfindung betrifft eine Vorrichtung zum drehenden Antreiben einer Welle gemäss dem Oberbegriff des unabhängigen Patentanspruchs 1.

Für die Betätigung von z.B. Klappen, beispielsweise Lüftungsklappen, Türen und Fenstern werden häufig Stellantriebe eingesetzt, die damit über eine Welle gekoppelt sind. Durch Drehen der Welle in die eine oder die andere Drehrichtung werden dabei die Klappen, Türen oder Fenster mehr oder weniger geöffnet bzw. geschlossen.

Moderne Stellantriebe sind oft modular aufgebaut. Das heisst, sie bestehen aus einer Antriebseinheit und einem mit der Antriebseinheit lösbar verbindbaren Adapter für die anzutreibende Welle, wobei die Antriebseinheit primär den Adapter drehend antreibt und der Adapter die kinematische Verbindung zur anzutreibenden Welle herstellt. Der Adapter selbst kann für eine bestimmte Art von Welle oder auch verstellbar ausgebildet sein, um z.B. Wellen unterschiedlicher Durchmesser und Formen aufnehmen zu können. Durch den modularen Aufbau ist es möglich, ein und dieselbe Antriebseinheit in Verbindung mit einem passenden Adapter für den Antrieb unterschiedlicher Wellen einzusetzen. Solche modularen Stellantriebe sind daher für viele Anwendungszwecke universell einsetzbar.

Bei einem bekannten modularen Stellantrieb dieser Art erfolgt die Verbindung zwischen der Antriebseinheit und dem Adapter durch ein am Adapter vorhandenes rohrförmiges Steckorgan, das in eine in der Antriebseinheit vorhandene rohrförmige Steckfassung eingesetzt werden kann, welche um ihre Achse drehend antreibbar in der Antriebseinheit gelagert ist. Die Steckfassung und das Steckorgan sind durch zusammenwirkende Formschlussmittel drehfest miteinander gekoppelt. Das rohrförmige Steckorgan erstreckt sich durch die rohrförmige Steckfassung hindurch und steht mit seinem freien Ende etwas aus der Steckfassung hervor. An diesem hervorstehenden Ende des Steckorgans ist in einer Ringnut ein Sicherungsring angebracht, der das Steckorgan und damit den Adapter in axialer Richtung in der Steckfassung bzw. in der Antriebseinheit fixiert.

Die Handhabung dieser bekannten Art von Stellantrieben ist insbesondere deswegen relativ umständlich, weil zur Anbringung bzw. Entfernung des zur axialen Fixierung des Adapters in der Antriebseinheit eingesetzten Sicherungsrings einerseits ein Spezialwerkzeug erforderlich ist und anderseits je nach Einbaulage der Antriebseinheit die Anbringung bzw. Entfernung des Sicherungsrings im eingebauten Zustand der Antriebseinheit oft nur schwer oder auch gar nicht möglich ist. Ausserdem ist das aus der Steckfassung hervorstehende Ende des Steckorgans bei vielen Einsatzfällen des Stellantriebs störend.

Der Erfindung liegt die Aufgabe zugrunde, eine Vorrichtung der eingangs erwähnten Art mit geringstem konstruktivem Aufwand hinsichtlich ihrer Handhabbarkeit zu verbessern. Konkreter sollen die Verbindung des Adapters der Vorrichtung mit der Antriebseinheit und die Lösung des Adapters aus der Antriebseinheit werkzeuglos und unabhängig von der Einbaulage der Antriebseinheit auf einfachste Weise durchführbar sein.

Diese Aufgabe wird durch die erfindungsgemässe Vorrichtung gelöst, wie sie im unabhängigen Patentanspruch 1 definiert ist. Besonders vorteilhafte Weiterbildungen und Ausgestaltungen der Erfindung ergeben sich aus den abhängigen Patentansprüchen.

Unter "Welle" wird im Rahmen der vorliegenden Erfindung unabhängig von der konkreten Formgebung jede Art von Wellenkörper mit einer Längsachse verstanden, der um seine Achse gedreht werden und ein Drehmoment an ein anderes Element weiterleiten kann. Üblicherweise ist eine Welle im Wesentlichen zylinderförmig, sie kann aber zum Beispiel auch als Stab mit teilweise oder über die gesamte Länge viereckigem, polygonalem oder andersförmigem Querschnitt ausgebildet sein.

Das Wesen der Erfindung besteht in Folgendem: Eine Vorrichtung zum drehenden Antreiben einer Welle umfasst eine Antriebseinheit, die ein um eine Achse drehbar antreibbares Drehteil aufweist, und einen mit Verbindungsmitteln für die anzutreibende Welle versehenen Adapter. Das Drehteil weist eine im Wesentlichen rohrförmige, zur Achse koaxiale Steckfassung und der Adapter ein im Wesentlichen rohrförmiges, axial in die Steckfassung einführbares Steckorgan auf. Die Steckfassung und das Steckorgan sind mit Formschlussmitteln zu ihrer Kupplung auf Drehung ausgestattet. Es sind ferner lösbare Fixiermittel vorhanden, um den Adapter lösbar an der Antriebseinheit zu befestigen. Die Fixiermittel weisen mindestens ein seitlich am Adapter angeordnetes und federnd einwärts bewegliches Arretierelement auf, welches einen Fortsatz besitzt, der sich in eine Ausnehmung in der Wand des Steckorgans hinein erstreckt und an seinem freien Ende einen bezüglich des Steckorgans radial auswärts vorstehenden Vorsprung aufweist. An der Innenwand der Steckfassung ist in der Nähe deren Öffnungsrands eine Hinterschneidung ausgebildet, welche der Vorsprung des Arretierelements bei mit seinem Steckorgan in die Steckfassung eingesetztem Adapter federnd hintergreift und dadurch den Adapter axial fixiert. Die Ausnehmung durchsetzt die Wand des Steckorgans vollständig oder ist zumindest ausreichend tief ausgebildet, um den Vorsprung durch radiale Einwärtsbewegung des Arretierelements ausser Eingriff mit der Hinterschneidung zu bringen und dadurch die axiale Fixierung des Adapters zu lösen.

Durch die spezielle Ausbildung der Fixiermittel kann der Adapter werkzeuglos und bequem mit dem Drehteil verbunden und an diesem fixiert bzw. wieder von diesem gelöst werden, wobei die Einbaulage der Antriebseinheit keine Rolle spielt.

Vorteilhafterweise ist das Arretierelement selbst verhältnismässig steif, aber bereichsweise federnd ausgebildet. Dadurch ergibt sich eine stabile Konstruktion.

Für einen sicheren Halt des Adapters ist es von Vorteil, wenn das Arretierelement einen abgewinkelten Abschnitt aufweist, der eine dem Steckorgan abgewandte Oberseite des Adapters übergreift.

Für eine kompakte Bauform des Adapters ist es vorteilhaft, wenn der Adapter eine seitliche Ausnehmung aufweist, die in die Ausnehmung am Steckorgan übergeht und das Arretierelement ganz oder teilweise aufnimmt.

Dabei ist es zur Erleichterung der elastischen Einwärtsbewegung des Arretierelements von Vorteil, wenn die seitliche Ausnehmung des Adapters in Richtung auf das Steckorgan zu eine zunehmende Tiefe aufweist.

Für eine sichere Fixierung des Adapters bei gleichzeitig einfacher Handhabbarkeit ist es vorteilhaft, wenn die Fixiermittel zwei gegenüberliegende, seitlich am Adapter angeordnete und federnd einwärts bewegliche Arretierelemente mit je einem Fortsatz und einem daran angeordneten Vorsprung aufweisen und an der Innenwand der Steckfassung zwei sich diametral gegenüberliegende Hinterschneidungen ausgebildet sind, die mit jeweils einem der Vorsprünge zusammenarbeiten.

Konstruktiv ist es dabei besonders vorteilhaft, wenn die beiden Arretierelemente durch ein Ringelement miteinander verbunden und zusammen mit diesem einstückig ausgebildet sind.

Für eine beidseitige Einsetzbarkeit des Adapters in die Antriebseinheit ist es vorteilhaft, wenn die Steckfassung beidseits offen ausgebildet und ihre Innenwand in der Nähe ihrer beiden Öffnungsränder je mit mindestens einer Hinterschneidung versehen ist, so dass der Adapter mit seinem Steckorgan sowohl von der einen als auch von der anderen Seite in die Steckfassung einführbar und axial fixierbar ist.

Zur konstruktiv einfachen und zuverlässigen Kupplung des Steckorgans und der Steckfassung auf Drehung sind die Formschlussmittel vorteilhafterweise durch mindestens eine Nut- und Federanordnung am Steckorgan und an der Steckfassung gebildet.

Dabei ist es mit Hinblick auf die beidseitige Einsetzbarkeit des Adapters besonders vorteilhaft, wenn das Steckorgan mit einer achsparallelen Rippe und die Steckfassung mit einer achsparallelen Nut ausgestattet ist, wobei vorzugsweise die Nut gegenüber der Hinterschneidung oder den Hinterschneidungen bezüglich der Achse um im Wesentlichen 90° winkelversetzt angeordnet ist.

Weiters ist es zweckmässig, wenn die Antriebseinheit Drehbegrenzungsmittel für den Adapter aufweist.

Dabei ist es für eine einfache konstruktive Realisierung vorteilhaft, wenn die Drehbegrenzungsmittel einen an der Antriebseinheit angeordneten bogenförmigen Schlitz aufweisen, in den ein am Adapter vorhandener Zapfen eingreift und sich beim Drehen des Adapters längs des Schlitzess bewegt, und dass im Schlitz vorzugsweise zwei längs desselben verstellbare Anschläge angeordnet sind.

Gemäss einer besonders vorteilhaften Weiterbildung weisen die Verbindungsmittel des Adapters für die anzutreibende Welle zwei bezüglich der Achse gegenüberliegend an der Welle angreifende und im Adapter symmetrisch zur Achse aufeinander zu und voneinander weg verstellbare Klemmorgane auf, zwischen welche die Welle axial einführbar ist und welche die Welle zwischen sich festklemmen, wobei die beiden Klemmorgane mittels eines im Adapter schwenkbar gelagerten zweiarmigen Hebels kinematisch gekoppelt sind. Zum aufeinander zu Bewegen der beiden Klemmorgane ist ein mit einer Stützfläche und einem Gewindeschaft versehenes Spannorgan vorhanden, welches sich mit seiner Stützfläche an dem einen Klemmorgan abstützt und mit seinem Gewindeschaft in ein am anderen Klemmorgan vorhandenes Gewinde eingreift, wobei durch Drehen des Spannorgans die beiden Klemmorgane gegeneinander gezogen werden und die Welle zwischen sich festklemmen.

Durch diese spezielle Ausbildung der Verbindungsmittel wird eine besonders einfache Konstruktion erreicht.

Zur weiteren Konstruktionsvereinfachung ist es vorteilhaft, wenn der zweiarmige Hebel in einer im Wesentlichen schmetterlingsförmigen Ausnehmung in einem Wandteil des Adapters lose angeordnet und schwenkbar gelagert ist.

Zweckmässigerweise ist dabei der zweiarmige Hebel an seinen beiden Enden mit je einem Zapfen versehen, welche Zapfen zueinander entgegengesetzt gerichtet sind und in je einen an den beiden Klemmorganen vorhandenen Schlitz eingreifen.

Im Folgenden wird die erfindungsgemässe Vorrichtung unter Bezugnahme auf die beigefügten Zeichnungen anhand von zwei Ausführungsbeispielen detaillierter beschrieben. Es zeigen:
- Fig. 1 -: eine schematische Ansicht eines ersten Ausführungsbeispiels der erfindungsgemässen Vorrichtung,
- Fig. 2 -: einen Schnitt nach der Linie II-II der Fig. 1,
- Fig. 3 -: eine Explosionsansicht der erfindungsrelevanten Teile der Vorrichtung,
- Fig. 4 -: eine Seitenansicht des Adapters der Vorrichtung gemäss Fig. 1,
- Fig. 5 -: eine Ansicht des Adapters aus einer gegenüber Fig. 4 um 90° gedrehten Richtung,
- Fig. 6 -: einen Schnitt durch den Adapter nach der Linie VI-VI der Fig. 5,
- Fig. 7 -: einen Schnitt durch den Adapter nach der Linie VII-VII der Fig. 4,
- Fig. 8 -: eine Draufsicht auf ein Drehteil der Vorrichtung gemäss Fig. 2,
- Fig. 9 -: einen Schnitt durch das Drehteil nach der Linie IX-IX der Fig. 8,
- Fig. 10 -: einen Schnitt durch das Drehteil nach der Linie X-X der Fig. 8,
- Fig. 11 -: eine Schnittdarstellung eines in das Drehteil eingesetzten Adapters in einer Ebene entsprechend der Linie XI-XI der Fig. 3,
- Fig. 12 -: einen Detailschnitt nach der Linie XII-XII der Fig. 1,
- Fig. 13 -: eine Seitenansicht der Vorrichtung mit einem von unten eingesetzten Adapter,
- Fig. 14 -: eine Draufsicht auf eine Variante eines Adapters gemäss einem zweiten Ausführungsbeispiel,
- Fig. 15 -: einen Schnitt nach der Linie XV-XV der Fig. 14 und
- Fig. 16 -: einen Schnitt nach der Linie XVI-XVI der Fig. 14.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

Die in der Zeichnung dargestellte Vorrichtung besteht aus zwei Hauptkomponenten, und zwar einer Antriebseinheit 100 und einem Adapter 200, der mit der Antriebseinheit 100 lösbar verbunden ist und von dieser um eine Achse A begrenzt drehbar antreibbar ist.

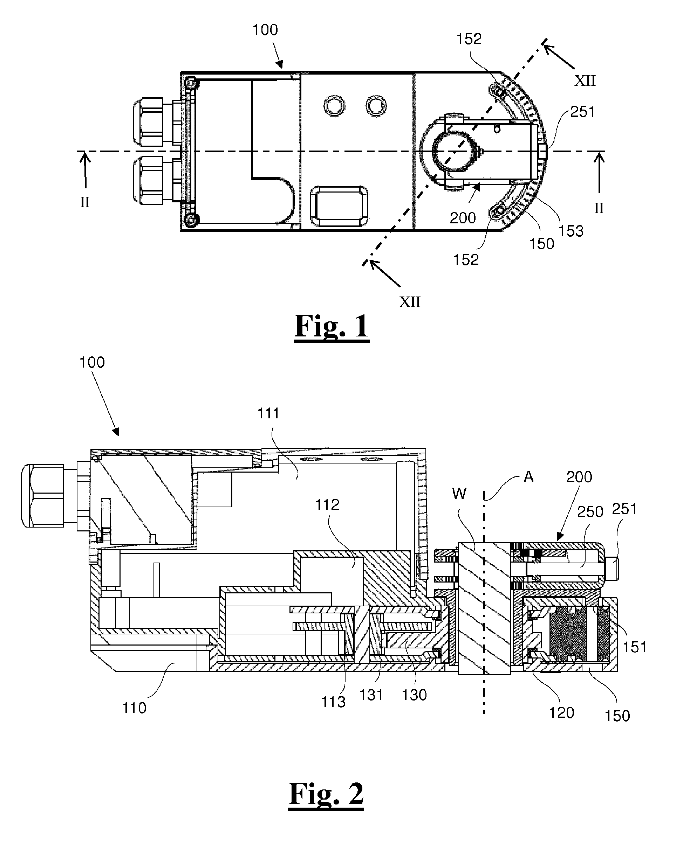

Wie aus dem Längsschnitt der Fig. 2 ersichtlich, weist die Antriebseinheit 100 ein Gehäuse auf, das aus einem etwas höheren Gehäusebereich 110 und einem etwas niedrigeren Gehäusebereich 120 besteht, wobei die nicht bezeichneten Böden der beiden Gehäusebereiche 110 und 120 in einer Ebene liegen. (Lage- und Richtungsbezeichnungen beziehen sich hier und im Folgenden auf die Darstellung der Fig. 2.)

Im niedrigeren Gehäusebereich 120 ist ein Drehteil 130 um die Achse A drehbar gelagert, welches einteilig oder mehrteilig ausgebildet sein kann. Im höheren Gehäusebereich 110 sind ein Antriebsmotor 111 und ein mit diesem verbundenes Getriebe 112 untergebracht, das abtriebseitig ein Zahnritzel 113 aufweist. Das Zahnritzel 113 ist über die anderen Teile des Getriebes 112 vom Antriebsmotor 111 1 links- und rechtsdrehend angetrieben. Ferner befinden sich im höheren Gehäusebereich 110 noch eine nicht dargestellte Steuerung sowie diverse, nicht bezeichnete Bedienungsorgane für den Motor 111 bzw. die Steuerung desselben. Das Zahnritzel 113 ist um eine zur Achse A parallele Achse drehbar und kämmt mit einem bogenförmigen Zahnkranz 131 des Drehteils 130. Das Drehteil 130 ist somit über das Zahnritzel 113 begrenzt drehbar angetrieben.

Der Adapter 200 ist in weiter unten noch näher erläuterter Weise in den niedrigeren Gehäusebereich 120 der Antriebseinheit 100 bzw. dessen Drehteils 130 eingesetzt und dabei drehfest mit dem Drehteil 130 verbunden. Der Adapter 200 kann also von der Antriebseinheit 100 um die Achse A links- oder rechtsdrehend begrenzt gedreht bzw. geschwenkt werden.

Wie ebenfalls weiter unten noch näher ausgeführt ist, ist eine anzutreibende Welle W zur Achse A koaxial im Adapter 200 angeordnet, wobei die Welle W im Betrieb der Vorrichtung drehfest mit dem Adapter 200 verbunden ist. Von der Welle W ist in den Zeichnungsfiguren jeweils nur ein kurzes Stück dargestellt, in der Praxis ist die Welle jedoch je nach den Einsatzerfordernissen etwas oder erheblich länger. Durch die drehfeste Verbindung von Adapter 200 und Welle W kann die Welle W über den Adapter 200 von der Antriebseinheit 100 um die Achse A links- oder rechtsdrehend begrenzt gedreht bzw. geschwenkt werden.

Soweit entspricht die erfindungsgemässe Vorrichtung den bekannten Stellantrieben bzw. Drehantriebsvorrichtungen dieser Art und bedarf deshalb für den Fachmann keiner näheren Erläuterung. Die vorliegende Erfindung betrifft vor allem die spezielle Ausbildung des Adapters und die entsprechende Ausbildung des diesen antreibenden Drehteils sowie einige weitere vorteilhafte Ausgestaltungen der Vorrichtung. Im nachfolgenden Beschreibungsteil wird daher nur noch darauf näher eingegangen.

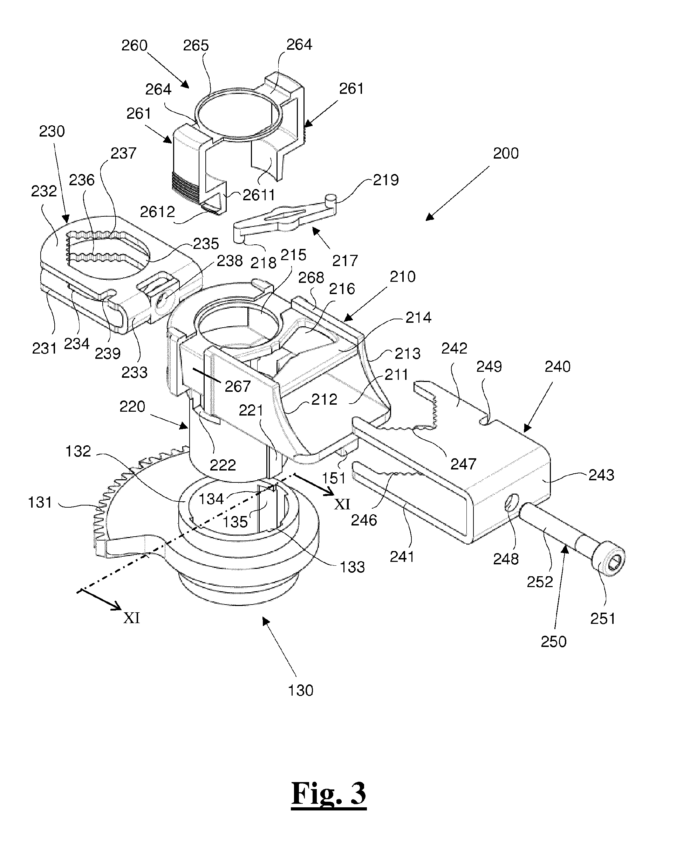

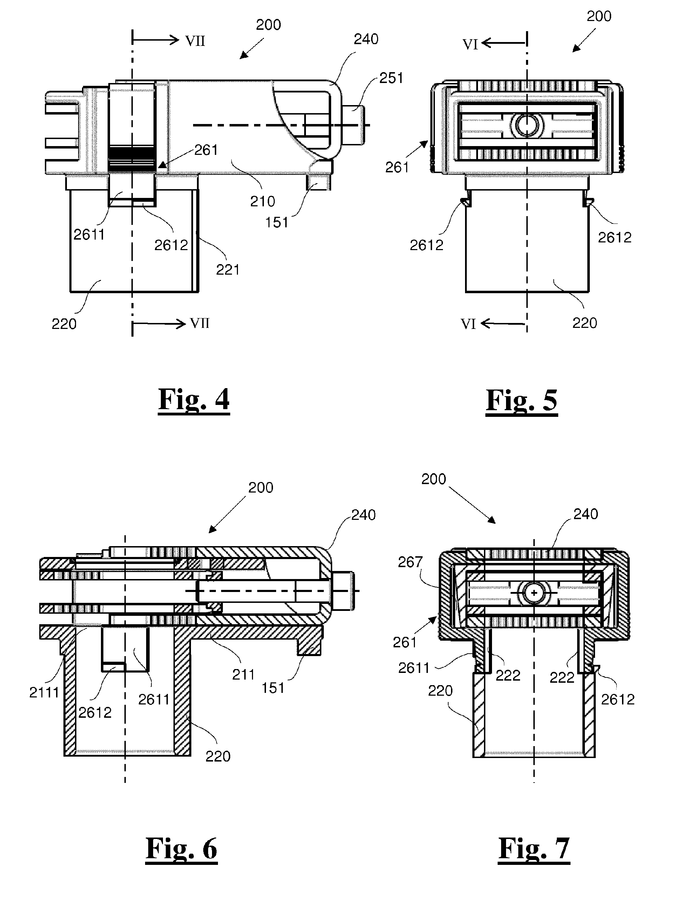

Der Aufbau des Adapters 200 ist am besten aus der Explosionsansicht der Fig. 3 sowie den Seiten- und Schnittansichten der Figuren 4-7 ersichtlich. Der Adapter umfasst ein Adaptergehäuse 210 und ein mit diesem vorzugsweise einstückig verbundenes, rohrförmiges Steckorgan 220. Das Adaptergehäuse 210 besitzt zwei parallele Seitenwände 212 und 213, eine Bodenwand 211 und eine Deckelwand 214 und hat im Wesentlichen die Gestalt eines beidseits offenen Rohrs mit rechteckigem Querschnitt. Das rohrförmige Steckorgan 220 steht senkrecht von der Bodenwand 211 ab und mündet durch eine Öffnung 2111 (Fig. 6) in der Bodenwand in das Innere des Adaptergehäuses. In der Deckelwand 214 befindet sich koaxial zum Steckorgan 220 eine kreisrunde Öffnung 215, deren Durchmesser dem Innendurchmesser des Steckorgans 220 entspricht. Die in den Figuren 3-7 nicht dargestellte anzutreibende Welle W kann in axialer Richtung durch die Öffnung 215 in den Adapter 200 bis in dessen Steckorgan 220 eingeführt werden. Die Einführung der Welle W ist auch in umgekehrter Richtung möglich.

Im Adaptergehäuse 210 sind Verbindungsmittel untergebracht, welche den Adapter 200 auf lösbare Weise mit der anzutreibenden Welle W auf Drehung kuppeln und auch axial festhalten. Die Verbindungsmittel umfassen im Wesentlichen zwei Klemmorgane 230 und 240, die im Adaptergehäuse 210 symmetrisch zur Achse A (Fig. 2) quer zu dieser aufeinander zu bzw. voneinander weg verschiebbar angeordnet sind und zwischen denen die Welle festgeklemmt werden kann. Da die Welle W ortsfest ist, wird der Adapter 200 durch die symmetrische Bewegung der Klemmorgane 230 und 240 selbstzentriert.

Beide Klemmorgane 230 und 240 haben im Wesentlichen die Gestalt eines U-förmigen Bügels und weisen je einen unteren Bügelteil 231 bzw. 241, einen dazu parallelen oberen Bügelteil 232 bzw. 242 und einen mittleren Bügelsteg 233 bzw. 243 auf. Der Bügelsteg 243 des in der Fig. 3 rechten Klemmorgans 240 ist etwas höher als der Bügelsteg 233 des linken Klemmorgans 230, so dass, wie insbesondere die Figuren 6 und 7 erkennen lassen, das linke Klemmorgan 230 in das rechte Klemmorgan 240 einführbar ist, wobei der untere Bügelteil 231 des linken Klemmorgans 230 auf dem unteren Bügelteil 241 des rechten Klemmorgans 240 gleitend aufliegt. Der obere Bügelteil 232 des linken Klemmorgans 230 verläuft knapp unterhalb der Deckelwand 214 des Adaptergehäuses 210, und der obere Bügelteil 242 des rechten Klemmorgans 240 verläuft knapp oberhalb der Deckelwand 214 des Adaptergehäuses 210.

Das linke Klemmorgan 230 weist in seinen Bügelteilen 231 und 232 zwei fluchtende Öffnungen 234 und 235 auf, deren Grösse im Wesentlichen der Öffnung 215 in der Deckelwand 214 des Adaptergehäuses 210 entspricht. Die Öffnungen 234 und 235 sind an ihren dem Bügelsteg 233 abgewandten Seiten V-förmig erweitert und dort mit einer Zahnanordnung 236 bzw. 237 versehen. Im Bügelsteg 233 ist ein Gewinde 238 angeordnet. Am oberen Bügelteil 232 des linken Klemmorgans 230 ist ferner ein seitlich offener Schlitz 239 ausgebildet.

Die freien Enden der beiden Bügelteile 241 und 242 des rechten Klemmorgans 240 sind gabelförmig ausgebildet und weisen zwei V-förmig einwärts verlaufende Zahnanordnungen 246 und 247 auf. Der Bügelsteg 243 ist mit einer mittig angeordneten Durchgangsöffnung 248 versehen. Am oberen Bügelteil 242 des Klemmorgans 240 ist ferner ein seitlich offener Schlitz 249 ausgebildet.

In der Deckelwand 214 des Adaptergehäuses 210 ist eine etwa schmetterlingsförmige Ausnehmung 216 vorhanden, in die im zusammengebauten Zustand des Adapters ein flacher zweiarmiger Hebel 217 lose eingelegt ist. Der Hebel 217 wird dabei von unten durch den oberen Bügelteil 232 des Klemmorgans 230 und von oben durch den oberen Bügelteil 242 des Klemmorgans 240 in Position gehalten. Der flache zweiarmige Hebel 217 weist an den Enden seiner beiden Hebelarme je einen Zapfen 218 bzw. 219 auf, die in entgegengesetzten Richtungen vom Hebel 217 abstehen und in je einen der seitlichen Schlitze 239 und 249 in den Klemmorganen 230 bzw. 240 eingreifen. Der flache zweiarmige Hebel 217 ist in der schmetterlingsförmigen Ausnehmung 216 der Deckelwand 214 des Adaptergehäuses 210 um eine zur Achse A parallele Achse begrenzt schwenkbar und stellt eine kinematische Kopplung der beiden Klemmorgane 230 und 240 her. Wenn eines der beiden Klemmorgane 230 und 240 in Richtung auf die Achse A zu oder von der Achse weg bewegt wird, wird dadurch zwangsweise auch das andere Klemmorgan um dieselbe Wegstrecke auf die Achse zu bzw. von dieser weg verstellt.

Der Bügelsteg 233 des linken Klemmorgans 230 befindet sich im zusammengebauten Zustand des Adaptergehäuses auf derselben Seite der Achse wie der Bügelsteg 243 des Klemmorgans 240. Zur Zusammenspannung der beiden Klemmorgane 230 und 240 in Richtung aufeinander zu ist ein Spannorgan 250 in Form einer Inbus-Schraube vorhanden, die einen Schraubenkopf 251 und einen Gewindeschaft 252 aufweist. Die Schraube 250 erstreckt sich durch die Durchgangsöffnung 248 des Klemmorgans 240 und greift mit ihrem Gewindeschaft 252 in das Gewinde 238 des Klemmorgans 230 ein. Der Schraubenkopf 251 wirkt als Stützfläche und stützt sich am Bügelsteg 243 des Klemmorgans 240 ab. Durch Anziehen des Spannorgans bzw. der Schraube 250 werden die beiden Klemmorgane 230 und 240 gegeneinander verschoben, wobei der zweiarmige Hebel 217 dafür sorgt, dass sich die beiden Klemmorgane 230 und 240 bezüglich der Achse A symmetrisch bewegen. Die durch die beiden Klemmorgane 230 und 240 gebildete Klemmanordnung für die Welle ist also selbstzentrierend, so dass der Adapter für Wellen unterschiedlichen Durchmessers eingesetzt werden kann, wobei der maximale Wellendurchmesser nur durch den Innendurchmesser des rohrförmigen Steckorgans 220 limitiert ist.

Zum Lösen der Klemmeinspannung der Welle wird das Spannorgan bzw. die Schraube 250 in entgegengesetzter Richtung gedreht und die dadurch nicht mehr zusammengespannten Klemmorgane 230 und 240 werden dann manuell auseinander gezogen.

Die Verbindung des Adapters 200 mit der Antriebseinheit 100 bzw. mit deren Drehteil 130 erfolgt über das Steckorgan 220 des Adapters. Das Drehteil 130 weist eine rohrförmige, zu seiner Drechachse A koaxiale Steckfassung 132 auf, über welche das Drehteil 130 im niedrigeren Gehäusebereich 120 der Antriebseinheit 100 drehbar gelagert ist. An der Innenwand der Steckfassung 132 ist eine durchgehende achsparallele Längsnut 133 ausgebildet. Ferner sind an der Innenwand der Steckfassung 131 vier Hinterschneidungen 134 ausgebildet, von denen in Fig. 3 nur eine sichtbar ist.

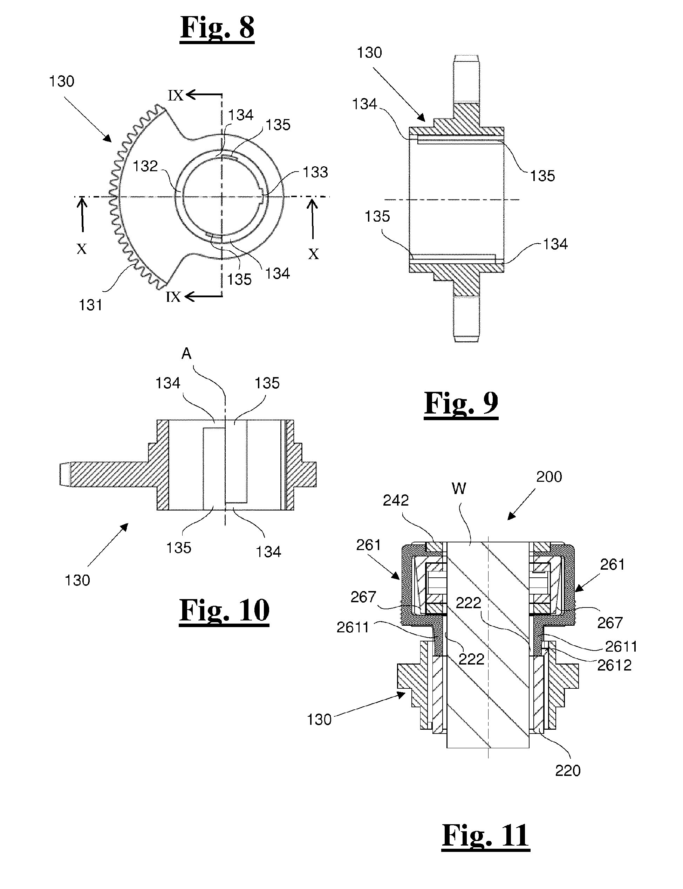

Die Ausbildung und Anordnung der Hinterschneidungen 134 ist aus den Figuren 8-10 deutlich zu erkennen. Sie werden dadurch gebildet, dass in der Innenwand vier in axialer Richtung jeweils nur einseitig offene achsparallele Nuten 135 vorhanden sind, von denen je zwei unmittelbar nebeneinander liegen und nach verschiedenen Seiten offen sind. Die jeweils in dieselbe axiale Richtung (nach oben oder nach unten) offenen Nuten liegen sich bezüglich der Achse A diametral gegenüber. Demzufolge befinden sich zwei der vier Hinterschneidungen 134 diametral gegenüberliegend knapp unterhalb des oberen Öffnungsrands der rohrförmigen Steckfassung 132, und die beiden anderen der vier Hinterschneidungen 134 sind sich ebenfalls diametral gegenüberliegend knapp oberhalb des unteren Öffnungsrands der Steckfassung 132 angeordnet.

Das rohrförmige Steckorgan 220 des Adapters 200 ist an seiner Aussenwand mit einer achsparallelen Längsrippe 221 ausgestattet, die formlich komplementär zur Längsnut 133 in der Steckfassung 132 ausgebildet ist. Wenn der Adapter 200 mit seinem Steckorgan 220 in die Steckfassung 132 des Drehteils 130 eingesetzt ist, greift die Längsrippe 221 in die Längsnut 133 ein, so dass die Steckfassung 132 und das Steckorgan 220 formschlüssig drehfest verbunden sind. Die Längsrippe 221 und die Längsnut 133 bilden somit Formschlussmittel zur Kupplung des Drehteils 130 und des Adapters 200 auf Drehung.

Ferner weist das Steckorgan 220 in seinem oberen, an die Bodenwand des Adaptergehäuses 210 angrenzenden Abschnitt zwei seitliche, sich diametral gegenüberliegende Ausnehmungen 222 auf, von denen in Fig. 3 nur eine sichtbar ist. In der Schnittdarstellung der Fig. 7 sind beide Ausnehmungen 222 erkennbar. Die Funktion dieser Ausnehmungen wird aus dem Folgenden klar.

Am Adaptergehäuse 210 sind Fixiermittel 260 zur axialen Fixierung des Adapters 200 an der Antriebseinheit 100 angeordnet. Die Fixiermittel 260 umfassen zwei seitlich und bezüglich der Drehachse diametral gegenüberliegende, U-förmig gewinkelte Arretierelemente 261 mit je einem Fortsatz 2611, an dessen freiem Ende je ein bezüglich der Achse A radial auswärts vorragender Vorsprung 2612 vorhanden ist. Die beiden Arretierelemente 261 sind über zwei Laschen 264 und ein Ringelement 265 einstückig miteinander verbunden (Fig. 3).

Am Adaptergehäuse 210 sind seitlich diametral gegenüberliegend und die Oberkanten 268 des Adaptergehäuses 210 übergreifend zwei Ausnehmungen 267 ausgebildet, welche in eine nicht bezeichnete ringförmige Vertiefung in der Deckelwand 214 münden. Das Ringelement 265 und die beiden Laschen 264 der Fixiermittel 260 liegen im zusammengebauten Zustand des Adapters in dieser Vertiefung und werden darin vom darüberliegenden oberen Bügelteil 242 des Klemmorgans 240 festgehalten. Das Ringelement 265 ist geringfügig grösser als die Öffnung 215 in der Deckelwand 214 des Adaptergehäuses 210.

Die beiden seitlichen Arretierelemente 261 der Fixiermittel 260 liegen in den seitlichen Ausnehmungen 267 des Adaptergehäuses 210 und ragen aus diesen nur teilweise heraus. Die unteren abgewinkelten Abschnitte der beiden Arretierelemente 261 springen radial einwärts, und die beiden Fortsätze 2611 der Arretierelemente 261 ragen achsparallel in die Ausnehmungen 222 des Steckorgans 220 hinein. Die radiale Höhe der Vorsprünge 2612 zusammen mit der Wandstärke der Fortsätze 2611 ist etwas grösser als die Wandstärke des rohrförmigen Steckorgans 220 im Bereich der Ausnehmungen 222.

Die beiden Arretierelemente 261 mit ihren Fortsätzen 2611 und den darauf angeordneten Vorsprüngen 2612 sind federnd beweglich am Adaptergehäuse 210 angeordnet. Bei nicht in die Steckfassung 132 eingesetztem Steckorgan 220 und ohne äussere Krafteinwirkung auf die Arretierelemente 261 ragen die Vorsprünge 2612 durch die Ausnehmungen 222 im Steckorgan 220 radial heraus (Figuren 5 und 7). Zum Einsetzen des Adapters in das Drehteil 130 werden die Arretierelemente 261 vorübergehend leicht radial einwärts gedrückt, wodurch sich die Vorsprünge 2612 in die Ausnehmungen 222 zurückziehen. Wenn das Steckorgan 220 vollständig in die Steckfassung eingesetzt ist, befinden sich die Vorsprünge 2612 axial unterhalb (oder bei Einsetzung von der anderen Seite oberhalb) der Hinterschneidungen 134 in der Steckfassung 132 und schnappen dann federnd radial nach aussen, wobei sie die Hinterschneidungen 134 hintergreifen und dadurch das Steckorgan 220 axial in der Steckfassung 132 fixieren (Fig. 11). Zum Lösen der axialen Fixierung für die Entnahme des Adapters 200 aus der Antriebseinheit 100 werden die Arretierelemente 261 gegeneinander gedrückt, so dass sich die Vorsprünge 2612 einwärts bewegen und dadurch ausser Eingriff mit den Hinterschneidungen kommen und der Adapter 200 aus der Steckfassung 132 des Drehteils 130 herausgezogen werden kann.

Wie aus dem Vorstehenden ohne weiteres klar ist, sind für die Fixierung des Adapters 200 in bzw. an der Antriebseinheit keinerlei Werkzeuge erforderlich. Der Adapter 200 kann einfach mit nur einer Hand montiert bzw. wieder von der Antriebseinheit 100 gelöst werden. Ausserdem kann die Fixierung und Lösung des Adapters in jeder beliebigen Einbaulage der Antriebseinheit erfolgen.

Die beiden Arretierelemente 261 sind selbst verhältnismässig steif, aber im oberen Bereich federnd ausgebildet. Durch die beiden Laschen 264 und des diese verbindenden Ringelements 265, die dünnwandiger ausgebildet sind, sind die beiden Arretierelemente 261 miteinander verbunden. Zur Erleichterung der radialen Einwärtsbewegung der beiden Arretierelemente 261 sind die beiden sie aufnehmenden seitlichen Ausnehmungen 267 so ausgebildet, dass sie nach unten, also in Richtung auf das Steckorgan 220 hin, eine zunehmende Tiefe aufweisen. Besonders gut ist dies in den Figuren 3 und 7 erkennbar.

Die erfindungsgemässe Realisierung der axialen Befestigung des Adapters 200 an der Antriebseinheit 100 hat einen weiteren Vorteil insofern, als beim Einsatz einer Welle W mit dem grösstmöglichen Durchmesser, also nahe dem Innendurchmesser des Steckorgans 220, sich eine Sperrwirkung für die Arretierelemente 261 ergibt, da dann die Fortsätze 2611 der Arretierelemente 261 praktisch an der Welle aufliegen und dadurch eine radiale Einwärtsbewegung der Vorsprünge 2612 verhindert wird. Eine Lösung des Adapters 200 von der Antriebseinheit 100 ist in diesem Fall nur nach vorhergehender Entnahme der Welle möglich.

Die elastische Einwärtsbeweglichkeit der beiden Arretierelemente 261 bzw. deren elastische Anlenkung am Adaptergehäuse 210 kann selbstverständlich auch auf andere Weise realisiert sein. Die vorstehend erläuterte Realisierungsform ist jedoch konstruktiv besonders einfach und zweckmässig.

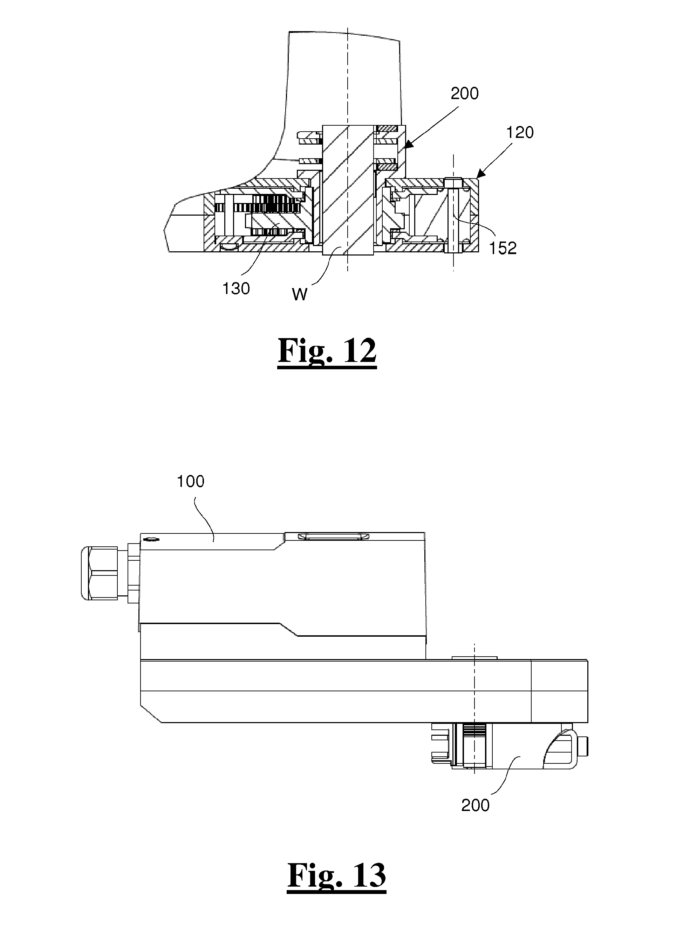

Die vorstehend beschriebene Ausbildung der Steckfassung 132 des Drehteils 130 mit symmetrisch und an beiden Enden der Steckfassung 132 angeordneten Hinterschneidungen 134 hat den Vorteil, dass der Adapter 200 auf beiden Seiten der Antriebseinheit 100 befestigt werden kann, in der Zeichnung also sowohl von der Oberseite als auch von der Unterseite. Die Figuren 1 und 2 zeigen eine erfindungsgemässe Vorrichtung mit von der Oberseite her eingesetztem Adapter 200, während die Fig. 13 eine Vorrichtung mit einem von der Unterseite der Antriebseinheit 100 her eingesetzten Adapter 200 zeigt.

Beim vorstehend beschriebenen Ausführungsbeispiel der erfindungsgemässen Vorrichtung ist der Adapter 200 mit zwei Arretierelementen 261 und zugehörigen Komponenten ausgestattet. Obwohl dies sowohl konstruktiv als auch ergonomisch besonders zweckmässig ist, kann der Adapter 200 aber auch nur mit einem einzigen Arretierelement oder mit mehr als zwei Arretierelementen ausgestattet sein.

Wie schon weiter vorne erläutert, ist der Adapter 200 und damit die Welle W in beiden Drehrichtungen nur begrenzt dreh- bzw. schwenkbar. Gemäss einer besonders vorteilhaften Weiterbildung ist die erfindungsgemässe Drehantriebsvorrichtung zusätzlich noch mit mechanischen Drehbegrenzungsmitteln ausgestattet. Der niedrigere Gehäusebereich 120 der Antriebseinheit 100 ist dazu vorzugsweise sowohl an der Oberseite als auch an der Unterseite mit einem bogenförmigen Schlitz 150 versehen, wobei die beiden Schlitze in Richtung der Achse A gesehen deckungsgleich angeordnet sind. An der Bodenwand 211 des Adaptergehäuses 210 ist ein Zapfen 151 angeformt oder befestigt (Fig. 2), welcher je nach Einbaulage des Adapters 200 in einen der beiden Schlitze 150 eingreift und beim Verdrehen des Adapters 200 sich entlang dieses Schlitzes bewegt. In den Schlitzen 150 sind zwei verstellbare Anschläge in Form von versenkten durchgehenden Schrauben 152 angeordnet, die die Schwenkbewegung des Zapfens 151 und damit des Adapters und damit wiederum der Welle W begrenzen. Die beiden Schrauben 152 können an den gewünschten Stellen längs der Schlitze 150 befestigt werden. Neben den Schlitzen 150 kann ferner noch eine Gradeinteilung 153 angebracht sein. Der Kopf 251 des Spannorgans 250 kann dabei als Zeiger dienen. Die Schnittdarstellung der Fig. 12 zeigt, wie die beiden Schrauben 152 im niedrigeren Gehäusebereich 120 der Antriebseinheit 100 angeordnet sind.

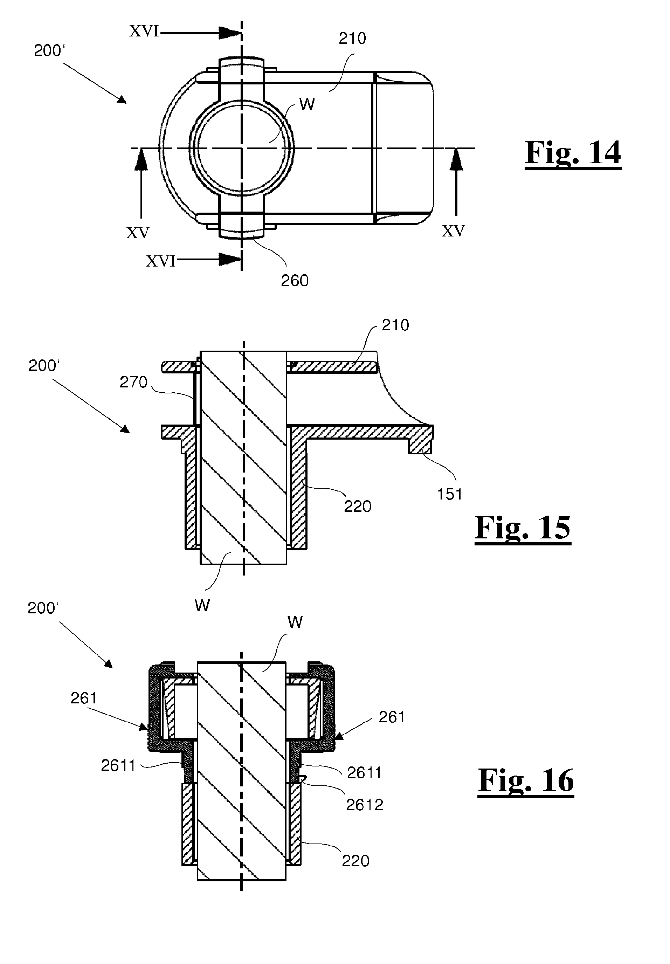

Vorstehend wurde die erfindungsgemässe Vorrichtung im Zusammenhang mit einem Adapter 200 beschrieben, der mit selbstzentrierenden Verbindungsmitteln für die anzutreibende Welle ausgestattet ist, wodurch der Adapter für Wellen mit unterschiedlichen Durchmessern eingesetzt werden kann. Selbstverständlich ist es auch möglich, den Adapter so auszubilden, dass er nur für eine einzigen Wellentyp verwendet werden kann. Ein solcher einfacherer Adapter ist in den Figuren 14-16 etwas schematisiert dargestellt, wobei diejenigen Teile, die sich nicht vom Adapter der Figuren 1-13 unterscheiden, mit denselben Bezugszeichen bezeichnet sind wie in den Figuren 1-13.

Die äussere Gestalt des einfacheren Adapters 200' ist im Wesentlichen gleich wie die des Adapters 200. Er umfasst ein Adaptergehäuse 210 und ein Steckorgan 220, welche beide gleich ausgebildet sind wie die entsprechenden Teile des Adapters 200. Am Adaptergehäuse 210 sind wiederum Fixiermittel 260 für die axiale Fixierung des Adapters 200' an der hier nicht gezeigten Antriebseinheit 100 angeordnet.

Im Unterschied zum Adapter 200 ist der Adapter 200' nicht mit selbstzentrierenden Verbindungsmitteln für die anzutreibende Welle W ausgestattet. Stattdessen ist die Welle direkt mit dem Adaptergehäuse 210 formschlüssig verbunden. Die entsprechenden Verbindungsmittel können zum Beispiel durch irgendwelche Nuten und in diese eingreifende Rippen oder dergleichen an der Welle und an entsprechenden Teilen des Adaptergehäuses realisiert sein. In der Fig. 15 sind die entsprechenden Verbindungsmittel nur symbolisch durch das mit 270 bezeichnete Element dargestellt.

## Patentansprüche

1. Vorrichtung zum drehenden Antreiben einer Welle (W) mit einer Antriebseinheit (100), die ein um eine Achse (A) drehbar antreibbares Drehteil (130) aufweist, und mit einem mit Verbindungsmitteln (230, 240; 270) für die anzutreibende Welle (W) versehenen Adapter (200; 200'), wobei das Drehteil (130) eine im Wesentlichen rohrförmige, zur Achse (A) koaxiale Steckfassung (132) und der Adapter (200; 200') ein im Wesentlichen rohrförmiges, axial in die Steckfassung (132) einführbares Steckorgan (220) aufweist, wobei die Steckfassung (132) und das Steckorgan (220) mit Formschlussmitteln (221, 133) zu ihrer Kupplung auf Drehung ausgestattet sind, und wobei lösbare Fixiermittel (260, 134) vorhanden sind, um den Adapter (200; 200') lösbar an der Antriebseinheit (100) zu befestigen, **dadurch gekennzeichnet, dass** die Fixiermittel (260, 134) mindestens ein seitlich am Adapter (200; 200') angeordnetes und federnd einwärts bewegliches Arretierelement (261) aufweisen, welches einen Fortsatz (2611) besitzt, der sich in eine Ausnehmung (222) in der Wand des Steckorgans (220) hinein erstreckt und an seinem freien Ende einen bezüglich des Steckorgans (220) radial auswärts vorstehenden Vorsprung (2612) aufweist, und dass an der Innenwand der Steckfassung (132) in der Nähe deren Öffnungsrands eine Hinterschneidung (134) ausgebildet ist, welche der Vorsprung (2612) des Arretierelements (261) bei mit seinem Steckorgan (220) in die Steckfassung (132) eingesetztem Adapter (200; 200') federnd hintergreift und dadurch den Adapter (200; 200') axial fixiert, wobei die Ausnehmung (222) die Wand des Steckorgans (220) vollständig durchsetzt oder zumindest ausreichend tief ausgebildet ist, um den Vorsprung (2612) durch radiale Einwärtsbewegung des Arretierelements (261) ausser Eingriff mit der Hinterschneidung (134) zu bringen und dadurch die axiale Fixierung des Adapters (200; 200') zu lösen.

2. Vorrichtung nach Anspruch 1, **dadurch gekennzeichnet, dass** das Arretierelement (261) selbst verhältnismässig steif, aber bereichsweise federnd ausgebildet ist.

3. Vorrichtung nach Anspruch 1 oder 2, **dadurch gekennzeichnet, dass** das Arretierelement (261) abgewinkelt ist und eine dem Steckorgan (220) ab gewandte Oberseite des Adapters (200; 200') übergreift.

4. Vorrichtung nach einem der vorangehenden Ansprüche, **dadurch gekennzeichnet, dass** der Adapter (200; 200') eine seitliche Ausnehmung (267) aufweist, die in die Ausnehmung (222) am Steckorgan (220) übergeht und das Arretierelement (261) ganz oder teilweise aufnimmt.

5. Vorrichtung nach Anspruch 4, **dadurch gekennzeichnet, dass** die seitliche Ausnehmung (267) des Adapters (200; 200') in Richtung auf das Steckorgan (220) zu eine zunehmende Tiefe aufweist.

6. Vorrichtung nach einem der vorangehenden Ansprüche, **dadurch gekennzeichnet, dass** die Fixiermittel (260, 134) zwei gegenüberliegende, seitlich am Adapter (200; 200') angeordnete und federnd einwärts bewegliche Arretierelemente (261) mit je einem Fortsatz (2611) und einem daran angeordneten Vorsprung (2612) aufweisen, und dass an der Innenwand der Steckfassung (132) zwei sich diametral gegenüberliegende Hinterschneidungen (134) ausgebildet sind, die mit jeweils einem der Vorsprünge (2612) zusammenarbeiten.

7. Vorrichtung nach Anspruch 6, **dadurch gekennzeichnet, dass** die beiden Arretierelemente (261) durch ein Ringelement (265) miteinander verbunden und zusammen mit diesem einstückig ausgebildet sind.

8. Vorrichtung nach einem der vorangehenden Ansprüche, **dadurch gekennzeichnet, dass** die Steckfassung (132) beidseits offen ausgebildet und ihre Innenwand in der Nähe ihrer beiden Öffnungsränder je mit mindestens einer Hinterschneidung (134) versehen ist, so dass der Adapter (200; 200') mit seinem Steckorgan (220) sowohl von der einen als auch von der anderen Seite in die Steckfassung (132) einführbar und axial fixierbar ist.

9. Vorrichtung nach einem der vorangehenden Ansprüche, **dadurch gekennzeichnet, dass** die Formschlussmittel (221, 133) zur Kupplung des Steckorgans (220) und der Steckfassung (132) auf Drehung durch mindestens eine Nut- und Federanordnung (221, 133) am Steckorgan (220) und an der Steckfassung (132) gebildet sind.

10. Vorrichtung nach Anspruch 9, **dadurch gekennzeichnet, dass** das Steckorgan (220) mit einer achsparallelen Rippe (221) und die Steckfassung (132) mit einer achsparallelen Nut (133) ausgestattet ist.

11. Vorrichtung nach einem der vorangehenden Ansprüche, **dadurch gekennzeichnet, dass** die Antriebseinheit (100) Drehbegrenzungsmittel (150, 152) für den Adapter (200) aufweist.

12. Vorrichtung nach Anspruch 11, **dadurch gekennzeichnet, dass** die Drehbegrenzungsmittel einen an der Antriebseinheit (100) angeordneten bogenförmigen Schlitz (150) aufweisen, in den ein am Adapter (200) vorhandener Zapfen (151) eingreift und sich beim Drehen des Adapters längs des Schlitzes bewegt, und dass im Schlitz (150) vorzugsweise zwei längs desselben verstellbare Anschläge (152) angeordnet sind.

13. Vorrichtung nach einem der vorangehenden Ansprüche, **dadurch gekennzeichnet, dass** die Verbindungsmittel (230, 240) des Adapters (200) für die anzutreibende Welle (W) zwei bezüglich der Achse (A) gegenüberliegend an der Welle (W) angreifende und im Adapter (200) symmetrisch zur Achse (A) aufeinander zu und voneinander weg verstellbare Klemmorgane (230, 240) aufweisen, zwischen welche die Welle (W) axial einführbar ist und welche die Welle (W) zwischen sich festklemmen, dass die beiden Klemmorgane (230, 240) mittels eines im Adapter (200) schwenkbar gelagerten zweiarmigen Hebels (217) kinematisch gekoppelt sind und dass zum aufeinander zu Bewegen der beiden Klemmorgane (230, 240) ein mit einer Stützfläche (251) und einem Gewindeschaft (252) versehenes Spannorgan (250) vorhanden ist, welches sich mit seiner Stützfläche (251) an dem einen Klemmorgan (240) abstützt und mit seinem Gewindeschaft (252) in ein am anderen Klemmorgan (230) vorhandenes Gewinde (238) eingreift, wobei durch Drehen des Spannorgans (250) die beiden Klemmorgane (230, 240) gegeneinander gezogen werden und die Welle (W) zwischen sich festklemmen.

14. Vorrichtung nach Anspruch 13, **dadurch gekennzeichnet, dass** der zweiarmige Hebel (217) in einer im Wesentlichen schmetterlingsförmigen Ausnehmung (216) in einem Wandteil (214) des Adapters (200) lose angeordnet und schwenkbar gelagert ist.

15. Vorrichtung nach Anspruch 13 oder 14, **dadurch gekennzeichnet, dass** der zweiarmige Hebel (217) an seinen beiden Enden mit je einem Zapfen (218, 219) versehen ist, welche Zapfen (218, 219) zueinander entgegengesetzt gerichtet sind und in je einen an den beiden Klemmorganen (230, 240) vorhandenen Schlitz (239, 249) eingreifen.
